# FASCICULE DE BREVET EUROPEEN

(11) **EP 4 061 674 B1**
(45) Date de publication et mention de la délivrance du brevet: **10.01.2024**
(21) Numéro de dépôt: 20808143.0
(22) Date de dépôt: 23.11.2020
(51) Int. Cl.: B60R 5/04

(54) **SYSTÈME DE RECOUVREMENT D'UN COMPARTIMENT À BAGAGES DE VÉHICULE AUTOMOBILE**
SYSTEM ZUR ABDECKUNG FÜR EIN GEPÄCKFACH EINES KRAFTFAHRZEUGS
SYSTEM FOR COVERING A MOTOR VEHICLE LUGGAGE COMPARTMENT

(30) Priorité: 21.11.2019 FR 1912998
(43) Date de publication de la demande: 28.09.2022
(73) Titulaire: TREVES PRODUCTS, SERVICES & INNOVATION, 75008 Paris (FR)
(72) Inventeur: BLOM, Christophe, 75008 Paris (FR)
(74) Mandataire: Sayettat, Julien Christian
(86) Numéro de dépôt international: PCT/EP2020/083096
(87) Numéro de publication internationale: WO 2021/099643

(56) Documents cités:
- DE-A1-102006 009 771
- DE-A1-102011 120 090
- DE-B4-102006 009 771
- JP-B2- 4 924 198
- US-A1- 2011 241 372

## Description

L'invention concerne un système de recouvrement d'un compartiment à bagages de véhicule automobile.

Il est connu de réaliser un système de recouvrement d'un compartiment à bagages de véhicule automobile, ledit système comprenant :
- un panneau de recouvrement dudit compartiment, ledit panneau comprenant un volet avant et un volet arrière, lesdits volets étant articulés l'un à l'autre selon une charnière transversale de manière à permettre une mise en rotation dudit volet arrière depuis une position horizontale de recouvrement vers une position relevée d'accès audit compartiment,
- des pièces de garniture des parois latérales dudit compartiment, lesdites pièces étant pourvues de moyens de réception en emboitement de moyens réciproques prévus sur ledit volet avant, de manière à permettre un accrochage fixe dudit volet avant sur lesdites pièces, de sorte que ledit volet avant reste en place quand on actionne ledit volet arrière.

On précise ici que, dans toute cette description, un panneau de recouvrement d'un compartiment à bagages peut être au choix :
- soit un panneau monté en haut dudit compartiment, de manière à masquer les bagages disposés dedans,
- soit un panneau monté en bas dudit compartiment, de manière à former un faux plancher sous lequel se trouve au moins un espace de rangement d'objets - tels une roue de secours ou une trousse à outils - l'actionnement du volet arrière position relevée permettant un accès audit espace.

Selon un agencement connu, le volet avant est maintenu en place par des doigts, formant moyens réciproques, saillant latéralement dudit volet, lesdits doigts s'emboitant dans des logements, formant moyens de réception, prévus dans les pièces de garniture.

Cependant, la présence de tels doigts saillants rend le panneau pourvu de tels doigts fragile, lesdits doigts pouvant facilement interférer avec leur environnement, notamment lorsqu'on démonte ledit panneau des pièces de garniture, lesdits doigts risquant alors de s'endommager lors de la manipulation dudit panneau une fois démonté.

L'invention a pour but de pallier cet inconvénient.

A cet effet, l'invention propose un système de recouvrement d'un compartiment à bagages de véhicule automobile, ledit système comprenant :
- un panneau de recouvrement dudit compartiment, ledit panneau comprenant un volet avant et un volet arrière, lesdits volets étant articulés l'un à l'autre selon une charnière transversale de manière à permettre une mise en rotation dudit volet arrière depuis une position horizontale de recouvrement vers une position relevée d'accès audit compartiment,
- des pièces de garniture des parois latérales dudit compartiment, lesdites pièces étant pourvues de moyens de réception en emboitement de moyens réciproques prévus sur ledit volet avant, de manière à permettre un accrochage fixe dudit volet avant sur lesdites pièces,
ledit système présentant en outre les caractéristiques suivantes :
- lesdits moyens de réception sont localisés à l'avant desdites pièces et lesdits moyens réciproques dans les coins avant dudit volet avant, lesdits moyens réciproques étant sensiblement non saillants latéralement des bords latéraux dudit volet avant,
- lesdits moyens de réception sont en forme de logements présentant en section longitudinale verticale une forme générale de U couché dont l'ouverture est tournée vers l'arrière de sorte que lesdits logements soient ouverts vers l'arrière, les branches du U correspondant à deux faces supérieure et inférieure horizontales parallèles généralement planes, lesdits logements étant en outre ouverts latéralement vers l'intérieur,
- lesdits moyens réciproques sont formés par deux méplats horizontaux supérieur et inférieur disposés dans chacun desdits coins, lesdits méplats se disposant chacun contre une desdites faces de manière à bloquer ledit volet avant en rotation.

Le document DE102011120090A1 divulgue un système de recouvrement d'un compartiment à bagages de véhicule automobile selon le préambule de la revendication 1.

Dans cette description, les termes de positionnement dans l'espace (supérieur, inférieur, longitudinal, transversal, latéral, avant, arrière, vertical, horizontal, ...) sont pris en référence au système en place dans le véhicule.

Avec l'agencement proposé, le maintien du panneau sur les pièces de garniture se fait par l'entremise de moyens réciproques sensiblement non saillants latéralement du volet avant, ce qui limite le risque de leur dégradation quand le panneau est démonté et manipulé.

D'autres particularités et avantages de l'invention apparaîtront dans la description qui suit, faite en référence aux figures jointes, dans lesquelles :

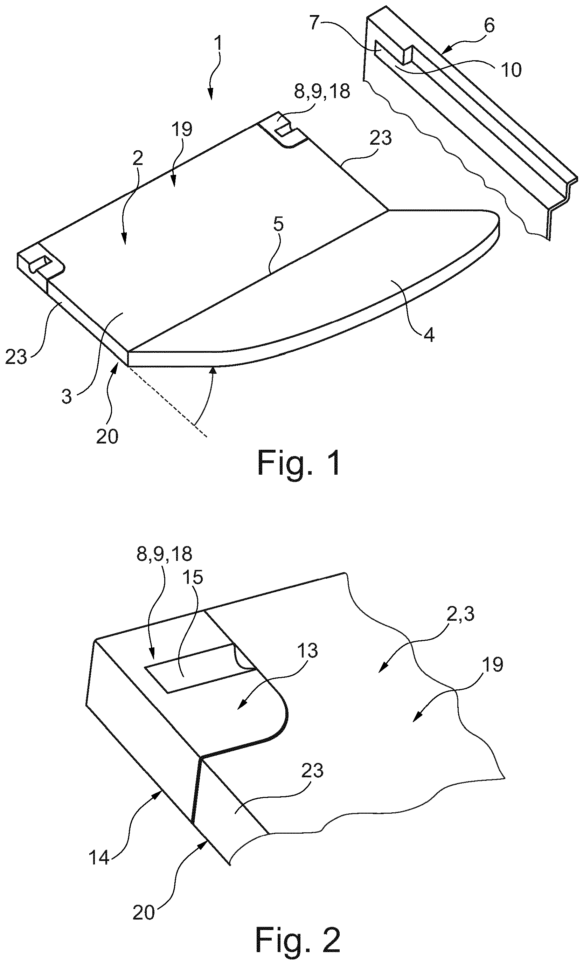

[Fig.1] est une vue en perspective schématique d'un système selon une réalisation, le volet arrière étant en position relevée,
[Fig.2] est une vue de détail de la figure 1,

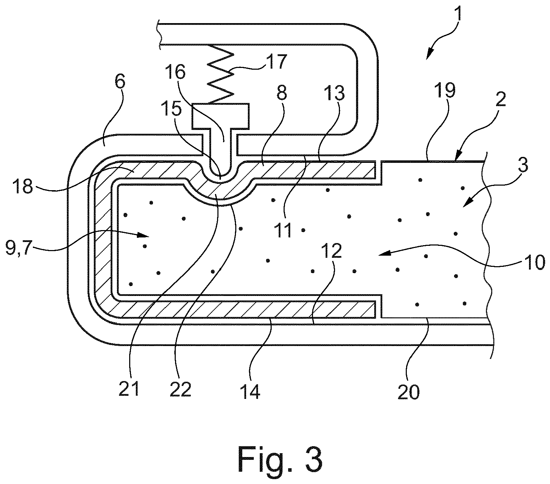

[Fig.3] est une vue en coupe longitudinale verticale schématique partielle du système de la figure 1.

En référence aux figures, on décrit un système 1 de recouvrement d'un compartiment à bagages de véhicule automobile, ledit système comprenant :
- un panneau 2 de recouvrement dudit compartiment, ledit panneau comprenant un volet avant 3 - par exemple à base de feutre thermo-comprimé, de mousse de polyuréthanne rigide moulée, ou encore de matériau plastique moulé par injection - et un volet arrière 4, lesdits volets étant articulés l'un à l'autre selon une charnière 5 transversale de manière à permettre une mise en rotation dudit volet arrière depuis une position horizontale de recouvrement vers une position relevée d'accès audit compartiment,
- des pièces de garniture 6 des parois latérales dudit compartiment, lesdites pièces étant pourvues de moyens de réception 7 en emboitement de moyens réciproques 8 prévus sur ledit volet avant, de manière à permettre un accrochage fixe dudit volet avant sur lesdites pièces,
ledit système présentant en outre les caractéristiques suivantes :
- lesdits moyens de réception sont localisés à l'avant desdites pièces et lesdits moyens réciproques dans les coins avant 9 dudit volet avant, lesdits moyens réciproques étant sensiblement non saillants latéralement des bords latéraux 23 dudit volet avant,
- lesdits moyens de réception sont en forme de logements présentant en section longitudinale verticale une forme générale de U couché dont l'ouverture 10 est tournée vers l'arrière de sorte que lesdits logements soient ouverts vers l'arrière, les branches du U correspondant à deux faces supérieure 11 et inférieure 12 horizontales parallèles généralement planes, lesdits logements étant en outre ouverts latéralement vers l'intérieur,
- lesdits moyens réciproques sont formés par deux méplats horizontaux supérieur 13 et inférieur 14 disposés dans chacun desdits coins, lesdits méplats se disposant chacun contre une desdites faces de manière à bloquer ledit volet avant en rotation.

Avec un tel agencement, le montage du panneau 2 se fait par mise en translation vers l'avant du volet avant 3 en position horizontale, ceci jusqu'à emboitement complet des moyens réciproques 8 dans les moyens de réception 7, ce qui permet de réaliser un blocage en rotation dudit volet avant.

Le démontage se fait à l'inverse par une traction effectuée vers l'arrière sur le volet avant 3, ceci jusqu'à déboitement des moyens réciproques 8 des moyens de réception 7.

Selon la réalisation représentée, un méplat 13,14 - respectivement une face horizontale 11,12 selon une réalisation non représentée - est pourvu d'un décroché 15, ledit décroché coopérant avec une saillie de blocage 16 issue d'une face horizontale 11,12 - respectivement d'un méplat 13,14 selon une réalisation non représentée -, ladite saillie étant rétractable élastiquement de manière à se rétracter temporairement lors du montage du panneau 2 sur les pièces de garniture 6 - de manière à réaliser un emboitement avec passage par un « point dur » -, ladite saillie revenant sensiblement en position nominale une fois ledit panneau monté de manière à bloquer le volet avant 3 dans les moyens de réception 7 et empêcher sa translation vers l'arrière.

Avec un tel agencement, le démontage du panneau 2 requiert l'application d'un effort horizontal vers l'arrière supérieur à un effort seuil, ceci de manière à passer le « point dur » sus évoqué.

En variante non représentée, la saillie 16 et le décroché 15 sont respectivement agencés de sorte que le démontage du panneau 2 ne puisse se faire par une telle traction vers l'arrière, ladite saillie étant solidaire d'un moyen d'actionnement, manuel ou motorisé, permettant de supprimer sa coopération avec ledit décroché.

Selon la réalisation représentée, le décroché 15 est sous forme d'un creux réalisé dans le méplat supérieur 13.

Avec un tel agencement, le volet avant 3 est bloqué non seulement en rotation mais aussi en translation vers l'arrière, ce qui permet d'actionner le volet arrière 4 sans impact sur le positionnement longitudinal dudit volet avant.

Selon la réalisation représentée, la saille de blocage 16 est actionnée vers sa position nominale par un ressort 17.

En variante non représentée, on pourrait prévoir que la saillie de blocage 16 soit réalisée à base d'un matériau élastiquement déformable, comme du caoutchouc.

Selon la réalisation représentée, les méplats 13,14 sont formés par les faces externes supérieure et inférieure d'un boitier 18 en matériau plastique moulé, ledit boitier étant ouvert vers l'arrière et latéralement vers l'intérieur, un coin avant 9 du volet avant 3 étant emboité dans ledit boitier.

Une telle réalisation est particulièrement adaptée à un volet avant 3 à base de mousse de polyuréthanne.

En variante non représentée, les méplats 13,14 sont issus des faces supérieure 19 et inférieure 20 du volet avant 3, une telle réalisation pouvant s'avérer pertinente quand ledit volet est à base de matériau plastique moulé par injection, ou encore de feutre thermo-comprimé.

Selon la réalisation représentée, un boitier 18 est pourvu d'une saillie interne 21, ladite saillie se logeant dans un évidement 22 prévu dans le volet avant 3 de manière à bloquer ledit boitier en emboitement sur ledit volet.

Selon la réalisation représentée, la saillie interne 21 est disposée en regard du décroché 15.

Le montage du boitier 18 se fait alors en force, jusqu'à son positionnement nominal qui permet l'insertion de la saillie interne 21 dans l'évidement 22.

Selon une variante de réalisation non représentée, il peut être envisagé que le boitier 18 soit fixé par une vis - ou un rivet en autre variante non représentée -, ceci que ledit boitier soit pourvu ou non d'une saillie interne 21.

En particulier, une plaque métallique de renfort peut être incorporée au volet avant 3, notamment par surmoulage, la vis ou le rivet traversant un orifice, fileté ou non, prévu dans ladite plaque.

Selon une réalisation non représentée, la charnière 5 peut être formée par un matériau de revêtement - par exemple à base de moquette - des faces supérieures 19 des volets 3,4, ledit matériau s'étendant de façon continue sur chacun desdits volets de manière à former une charnière souple entre les deux.

## Revendications

1. Système (1) de recouvrement d'un compartiment à bagages de véhicule automobile, ledit système comprenant :
• un panneau (2) de recouvrement dudit compartiment, ledit panneau comprenant un volet avant (3) et un volet arrière (4), lesdits volets étant articulés l'un à l'autre selon une charnière (5) transversale de manière à permettre une mise en rotation dudit volet arrière depuis une position horizontale de recouvrement vers une position relevée d'accès audit compartiment,
• des pièces de garniture (6) des parois latérales dudit compartiment, lesdites pièces étant pourvues de moyens de réception (7) en emboitement de moyens réciproques (8) prévus sur ledit volet avant, de manière à permettre un accrochage fixe dudit volet avant sur lesdites pièces,
ledit système étant **caractérisé en ce que** :
• lesdits moyens de réception sont localisés à l'avant desdites pièces et lesdits moyens réciproques dans les coins avant (9) dudit volet avant, lesdits moyens réciproques étant sensiblement non saillants latéralement des bords latéraux (23) dudit volet avant,
• lesdits moyens de réception sont en forme de logements présentant en section longitudinale verticale une forme générale de U couché dont l'ouverture (10) est tournée vers l'arrière de sorte que lesdits logements soient ouverts vers l'arrière, les branches du U correspondant à deux faces supérieure (11) et inférieure (12) horizontales parallèles généralement planes, lesdits logements étant en outre ouverts latéralement vers l'intérieur,
• lesdits moyens réciproques sont formés par deux méplats horizontaux supérieur (13) et inférieur (14) disposés dans chacun desdits coins, lesdits méplats se disposant chacun contre une desdites faces de manière à bloquer ledit volet avant en rotation.

2. Système selon la revendication 1, **caractérisé en ce que** qu'un méplat (13,14) - respectivement une face horizontale (11,12) - est pourvu d'un décroché (15), ledit décroché coopérant avec une saillie de blocage (16) issue d'une face horizontale (11,12) - respectivement d'un méplat (13 ,14) -, ladite saillie étant rétractable élastiquement de manière à se rétracter temporairement lors du montage du panneau (2) sur les pièces de garniture (6), ladite saillie revenant sensiblement en position nominale une fois ledit panneau monté de manière à bloquer le volet avant (3) dans les moyens de réception (7) et empêcher sa translation vers l'arrière.

3. Système selon la revendication 2, caractérisé en que la saille de blocage (16) est actionnée vers sa position nominale par un ressort (17).

4. Système selon l'une quelconque des revendications 1 à 3, **caractérisé en ce que** les méplats (13,14) sont formés par les faces externes supérieure et inférieure d'un boitier (18) en matériau plastique moulé, ledit boitier étant ouvert vers l'arrière et latéralement vers l'intérieur, un coin avant (9) du volet avant (3) étant emboité dans ledit boitier.

5. Système selon la revendication 4, caractérisé en qu'un boitier (18) est pourvu d'une saillie interne (21), ladite saillie se logeant dans un évidement (22) prévu dans le volet avant (3) de manière à bloquer ledit boitier en emboitement sur ledit volet.

6. Système selon l'une quelconque des revendications 1 à 5, **caractérisé en ce que** la charnière (5) est formée par un matériau de revêtement des faces supérieures (19) des volets, ledit matériau s'étendant de façon continue sur lesdits volets de manière à former une charnière souple entre les deux.

## Patentansprüche

1. System (1) zur Abdeckung eines Gepäckfaches eines Kraftfahrzeugs, wobei das System umfasst:
• eine Platte (2) zur Abdeckung des Faches, wobei die Platte eine vordere Klappe (3) und eine hintere Klappe (4) umfasst, wobei die Klappen entlang eines querlaufenden Scharniers (5) aneinander angelenkt sind, um eine Drehung der hinteren Klappe aus einer horizontalen Abdeckposition in eine angehobene Position für den Zugriff auf das Fach zu erlauben,
• Verkleidungsteile (6) für die Seitenwände des Faches, wobei die Teile mit Aufnahmemitteln (7) durch Einstecken von gegenseitig wirkenden Mitteln (8), die an der vorderen Klappe vorgesehen sind, versehen sind, um ein festes Einhängen der vorderen Klappe auf den Teilen zu erlauben, wobei das System **dadurch gekennzeichnet ist, dass**:
• die Aufnahmemittel vorne an den Teilen, und die gegenseitig wirkenden Mittel in den vorderen Ecken (9) der vorderen Klappe lokalisiert sind, wobei die gegenseitig wirkenden Mittel im Wesentlichen seitlich nicht aus den seitlichen Rändern (23) der vorderen Klappe hervorstehend sind,
• die Aufnahmemittel in Form von Sitzen sind, die im vertikalen Querschnitt eine allgemeine Form eines liegenden U aufweisen, dessen Öffnung (10) nach hinten gedreht ist, sodass die Sitze nach hinten offen sind, wobei die Schenkel des U zwei im Allgemeinen ebenen, parallelen horizontalen oberen (11) und unteren (12) Flächen entsprechen, wobei die Sitze weiter seitlich nach innen offen sind,
• die gegenseitig wirkenden Mittel durch zwei obere (13) und untere (14) horizontale Abflachungen gebildet sind, die in jeder der Ecken angeordnet sind, wobei sich die Abflachungen jeweils an einer der Flächen anordnen, um die vordere Klappe einzurasten, damit sie sich nicht dreht.

2. System nach Anspruch 1, **dadurch gekennzeichnet, dass** eine Abflachung (13, 14) - beziehungsweise eine horizontale Fläche (11, 12) - mit einer Ausnehmung (15) versehen ist, wobei die Ausnehmung mit einem Rastvorsprung (16), der aus einer horizontalen Fläche (11, 12) - beziehungsweise einer Abflachung (13, 14) kommt, zusammenwirkt, wobei der Vorsprung elastisch einziehbar ist, um sich beim Anbringen der Platte (2) auf den Verkleidungsteilen (6) vorübergehend einzuziehen, wobei der Vorsprung im Wesentlichen in die nominale Position zurückkehrt, sobald die Platte angebracht ist, um die vordere Klappe (3) in den Aufnahmemitteln (7) einzurasten, und deren Verschiebung nach hinten zu verhindern.

3. System nach Anspruch 2, **dadurch gekennzeichnet, dass** der Rastvorsprung (16) durch eine Feder (17) in seine nominale Position betätigt wird.

4. System nach einem der Ansprüche 1 bis 3, **dadurch gekennzeichnet, dass** die Abflachungen (13, 14) durch die oberen und unteren Außenflächen eines Gehäuses (18) aus gegossenem Kunststoffmaterial gebildet sind, wobei das Gehäuse nach hinten, und seitlich nach innen offen ist, wobei eine vordere Ecke (9) der vorderen Klappe (3) in das Gehäuse eingesteckt ist.

5. System nach Anspruch 4, **dadurch gekennzeichnet, dass** ein Gehäuse (18) mit einem inneren Vorsprung (21) versehen ist, wobei der Vorsprung in einer Aussparung (22) sitzt, die in der vorderen Klappe (3) vorgesehen ist, um das Gehäuse in der Klappe eingesteckt einzurasten.

6. System nach einem der Ansprüche 1 bis 5, **dadurch gekennzeichnet, dass** das Scharnier (5) aus einem Material zum Beschichten der oberen Flachen (19) der Klappen gebildet ist, wobei sich das Material durchgehend über die Klappen erstreckt, um zwischen den beiden ein biegsames Scharnier zu bilden.

## Claims

1. System (1) for covering a motor vehicle luggage compartment, said system comprising:
• a panel (2) for covering said compartment, said panel comprising a front flap (3) and a rear flap (4), said flaps being hinged together along a transverse hinge (5) so as to allow said rear flap to be rotated from a horizontal covering position to a raised position providing access to said compartment,
• trim parts (6) on the side walls of said compartment, said parts being provided with receiving means (7) that fit into reciprocal means (8) provided on said front flap so as to enable said front flap to be fixedly attached to said parts,
said system being **characterized in that**:
• said receiving means are located at the front of said parts and said reciprocal means in the front corners (9) of said front flap, said reciprocal means being substantially non-protruding laterally from the side edges (23) of said front flap,
• said receiving means are in the form of housings which, in vertical longitudinal section, are generally in the shape of a recumbent U, the opening (10) of which faces rearwards such that said housings are open towards the rear, the arms of the U corresponding to two parallel, generally flat, horizontal upper (11) and lower (12) faces, said housings also being laterally open towards the interior,
• said reciprocal means are formed by two horizontal upper (13) and lower (14) flat areas arranged in each of said corners, said flat areas each being arranged against one of said faces so as to block said front flap in rotation.

2. System according to claim 1, **characterized in that** a flat area (13, 14) - respectively a horizontal face (11, 12) - is provided with an offset (15), said offset cooperating with a locking projection (16) from a horizontal face (11, 12) - respectively from a flat area (13, 14) - said projection being elastically retractable so as to retract temporarily when the panel (2) is mounted on the trim parts (6), said projection returning substantially to a nominal position once said panel has been mounted so as to lock the front flap (3) in the receiving means (7) and prevent its rearward translation.

3. System according to claim 2, **characterized in that** the locking projection (16) is moved towards its nominal position by a spring (17).

4. System according to one of claims 1 to 3, **characterized in that** the flat areas (13, 14) are formed by the upper and lower external faces of a moulded plastic housing (18), said housing being open towards the rear and laterally towards the interior, a front corner (9) of the front flap (3) being fitted into said housing.

5. System according to claim 4, **characterized in that** a housing (18) is provided with an internal projection (21), said projection being housed in a recess (22) provided in the front flap (3) so as to lock said housing in place on said flap.

6. System according to one of claims 1 to 5, **characterized in that** the hinge (5) is formed by a material covering the upper faces (19) of the flaps, said material extending continuously over said flaps so as to form a flexible hinge between the two.
